Europäisches Patentamt

**European Patent Office**

**Office européen des brevets**

(11) Numéro de publication: **0 383 705**

**A1**

## (12) DEMANDE DE BREVET EUROPEEN

(21) Numéro de dépôt: **90420082.1**

(22) Date de dépôt: **15.02.90**

(51) Int. Cl.⁵: **B23Q 3/16**

(30) Priorité: **17.02.89 FR 8902452**

(43) Date de publication de la demande:
**22.08.90 Bulletin 90/34**

(84) Etats contractants désignés:
**BE DE ES GB IT**

(71) Demandeur: **PECHINEY BATIMENT**
**Site Industriel de Pommeuse B.P. no. 7,**
**Faremoutiers**
**F-77524 Coulommiers Cédex(FR)**

(72) Inventeur: **Bourineau, Francis**
**29, rue de Speuse**
**F-77169 Boissy-le-Châtel(FR)**

(74) Mandataire: **Séraphin, Léon et al**
**PECHINEY 28, rue de Bonnel**
**F-69433 Lyon Cedex 3(FR)**

(54) **Dispositif de serrage et desserrage automatique et de translation d'un objet de forme généralement allongée.**

(57) L'invention a pour objet un dispositif de serrage et desserrage automatique et de translation d'un objet, de forme généralement allongée, en vue de son usinage par un outil de coupe.

Le dispositif selon l'invention comporte deux mâchoires (1,2) mobiles de translation l'une par rapport à l'autre, portant deux mordaches (3,4) dont le profil intérieur reproduit le profil extérieur de la pièce à usiner, un système de translation de l'ensemble bloc-étau (1,2,3,4) devant (ou vers) l'outil de coupe (5) à l'aide d'une poignée de manoeuvre (7), qui dans son mouvement alternatif permet successivement le serrage du produit, puis sa translation par va et vient devant (ou vers et en retrait) l'outil, puis le desserrage du produit.

L'ensemble est utilisé pour l'usinage de pièces en série assez importante, les mordaches (3,4) interchangeables ayant un profil adapté aux pièces à usiner.

FIG. 2

# DISPOSITIF DE SERRAGE ET DESSERRAGE AUTOMATIQUE ET DE TRANSLATION D'UN OBJET DE FORME GENERALEMENT ALLONGEE

L'invention a pour objet un dispositif de serrage et desserrage automatique et de translation d'un objet de forme généralement allongée, en vue de son usinage par un outil de coupe.

On connaît par la demande française FR-A-2 547 754 un dispositif de ce genre utilisé en particulier pour fraiser les bouts des croisillons (ou petits bois) métalliques pour fenêtres à double vitrage.

Cependant ce dispositif présente les inconvénients suivants: étant à déplacement hydraulique et serrage manuel, ou pneumatique ce dispositif est complexe et nécessite une source d'air comprimé. Il ne peut donc pas être utilisé dans un grand nombre de petits ateliers, qui ne disposent, en général, que du réseau électrique comme source d'énergie.

L'invention vise donc à obtenir un dispositif jouant le même rôle mais actionné uniquement par voie manuelle, avec une construction aussi simple et robuste que possible, donc finalement moins coûteuse, moins lourde et moins encombrante.

Le dispositif selon l'invention comporte un bloc-étau constitué de deux mâchoires et deux mordaches. Les deux mâchoires métalliques se déplacent l'une par rapport à l'autre par un mouvement de translation (que l'on supposera horizontal) et portent des mordaches en matière plastique synthétique, ou métal mou (Pb), dont les formes internes sont complémentaires de la surface externe de (ou des) pièce(s) à usiner.

Si la pièce à usiner est un profilé, les mordaches présentent un profil en creux à surface cylindrique dont la directrice est la section droite externe du profilé considéré; cependant il est nécessaire de laisser un faible (j) jeu entre les mâchoires de façon à assurer un serrage effectif.

Ce mouvement de translation est guidé par des goujons noyés, dont une extrémité est solidaire de l'une des mâchoires, le reste étant inséré dans un logement de l'autre mâchoire avec interposition d'un ressort de rappel, agissant dans le sens de la fermeture des mâchoires.

Les goujons sont maintenus en place par une goupille transversale et le ressort de rappel s'appuie, à l'une de ses extrémités sur un épaulement du logement du goujon et à l'autre extrémité sous la tête du goujon. Les goujons coulissent dans la mâchoire mobile correspondante par l'intermédiaire d'une gaine lubrifiée ou autolubrifiante.

L'ouverture des mâchoires est obtenue par un mouvement de translation de celles-ci dans un plan parallèle à la direction longitudinale du profilé, par glissement mutuel de deux cames en forme de coins, qui s'appuient l'une sur l'autre par leur face en biseau, sous un angle α. L'un des coins est solidaire du bâti, l'autre de la mâchoire mobile. L'angle α a une valeur généralement comprise entre 5 et 15°. Ce mouvement de translation (ici vertical) de l'ensemble bloc-étau ci-dessus est obtenu de façon classique par un dispositif de pignon et crémaillère, ledit pignon étant mû par un levier de manoeuvre extérieur.

Lors de l'usinage de l'objet considéré, le dispositif étant supposé ouvert en position basse, on place l'objet entre les mordaches; par action alternative sur le levier de commande, lors du mouvement vertical vers le haut, les mordaches serrent automatiquement l'objet, puis celui-ci est usiné; lors du mouvement vertical vers le bas, l'objet repasse devant l'outil, puis est automatiquement desserré. On peut alors l'enlever et en remettre un autre à la place, etc...

Ce dispositif est complété par une butée solidaire du bâti limitant le déplacement de l'objet vers l'outil lors de son introduction dans les mâchoires en position ouverte.

Le dispositif peut également être conçu de manière à ce que, le mouvement de translation de va et vient du bloc-étau se fasse vers et en retrait de l'outil.

L'invention sera mieux comprise à l'aide de l'exemple suivant illustré par les fig. 1 à 4.

La figure 1 représente une vue en plan d'ensemble du bloc-étau.

La figure 2 représente en perspective une coupe schématique suivant le plan A-A de la fig. 1, mâchoires en position fermée.

La figure 3 représente en perspective une coupe schématique suivant le plan A-A de la fig.1, mâchoires en position ouverte.

La figure 4 représente en perspective une coupe schématique suivant la ligne brisée B-B de la fig. 1.

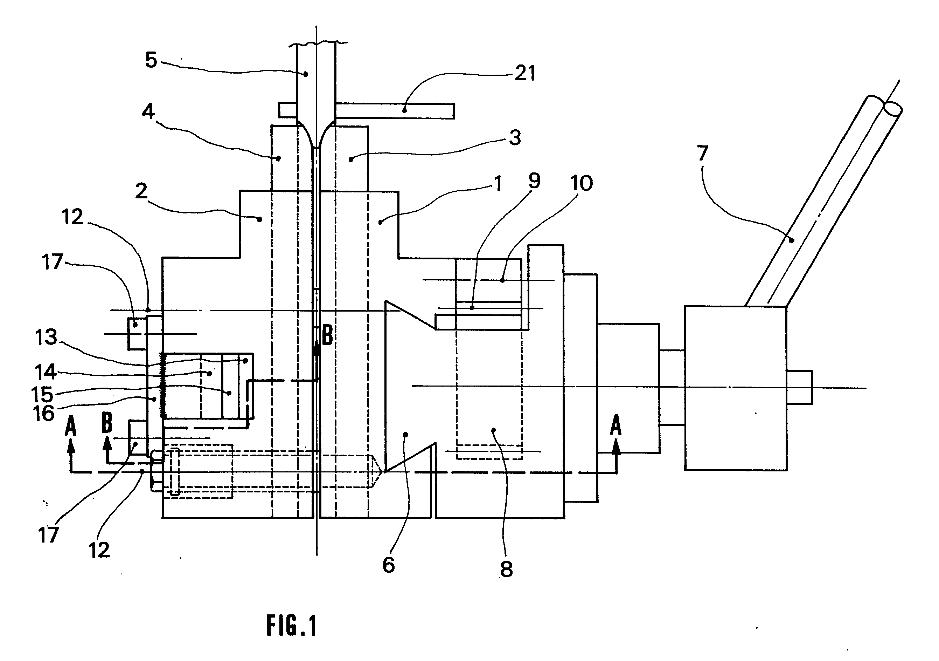

La figure 1 représente les deux mâchoires 1 et 2 mobiles en translation l'une par rapport à l'autre dans le sens horizontal. Ces mâchoires portent des mordaches 3,4 dans lesquelles est inséré le profil à usiner (non représenté).

Cet ensemble (1,2,3,4) se déplace devant l'outil 5 par un mouvement vertical, par coulissement de la queue d'aronde 6 solidaire du bâti du dispositif (non représenté).

Cette translation verticale est assurée par la manoeuvre en rotation du levier 7, lequel est solidaire d'un pignon 8, qui engrène avec une crémaillère 9 fixée sur la mâchoire 1 à l'aide de vis 10.

La mâchoire 2 comporte quatre logement 11 pour les goujons 12 et un logement 13 pour les coins de manoeuvre 14,15. Ce dernier logement est fermé par une plaque 16 fixée par des vis 17 et qui porte le coin 14 (par soudage ou vissage).

L'angle d'inclinaison des coins est de 5° 45' environ (tan α = 1/10). Les goujons 12 sont fixés dans la mâchoire 1 par leur extrémité cylindrique à l'aide d'une goupille 18.

Les goujons 12 coulissent dans le bloc 2 par l'intermédiaire de gaines cylindriques 19 réalisées en métal fritté autolubrifié ou en matière plastique type téflon.

Le logement 11 contient un ressort 20 entre l'épaulement de fond du logement 11 et la tête du goujon 12.

Le dispositif est complété par une butée 21, limitant la course de l'objet vers l'outil lors de son introduction dans le bloc-étau (1,2,3,4) en position ouverte. Cette butée est fixe et n'est effective que pendant le mouvement de translation vertical correspondant au serrage du produit (sur 1 cm environ).

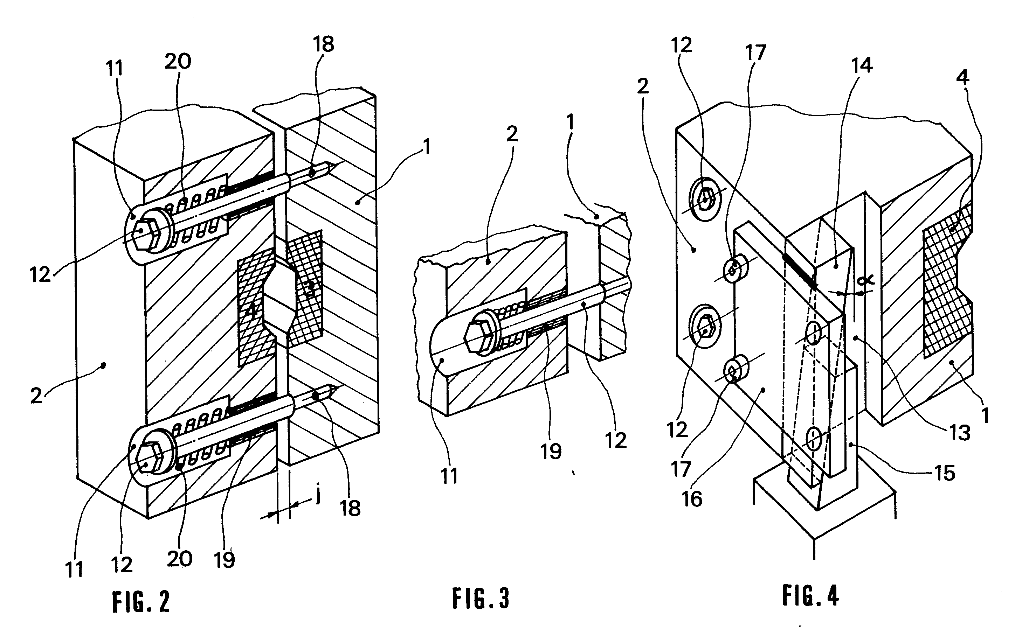

Lorsque les mâchoires sont abaissées à l'aide du levier 7, l'action conjuguée des coins 14, 15 écarte les mâchoires 1 et 2 et comprime les ressorts 20; cette position est représentée à la fig. 3. L'angle des coins étant faible, le mouvement est irréversible sans action motrice dans l'autre sens. Outre sa simplicité et son coût réduit, ce dispositif présente l'avantage d'être moins lourd et moins volumineux ce qui le rend plus facilement transportable (ainsi que la machine auquel il est associé).

Cet ensemble est utilisé pour l'usinage de pièces en série assez importante, les mordaches (3,4) interchangeables ayant un profil adapté aux pièces à usiner.

## Revendications

1. Dispositif de serrage-desserrage automatique et translation d'un objet devant un outil de coupe comportant deux mâchoires (1,2) mobiles en translation l'une par rapport à l'autre, portant deux mordaches (3,4) dont le profil intérieur reproduit le profil extérieur de la pièce à usiner, un système de translation de l'ensemble bloc-étau (1,2,3,4) devant (ou vers, puis en retrait de) l'outil (5) à l'aide d'une poignée de manoeuvre (7), la manoeuvre alternative du levier de commande (7) permettant successivement le serrage du produit, puis sa translation par va et vient devant (ou vers puis en retrait de) l'outil, puis le desserrage du produit, caractérisé en ce que l'axe longitudinal de la pièce à usiner est situé dans un plan parallèle à la direction de translation.

2. Dispositif selon la revendication 1 caractérisé en ce que la mâchoire (2) comporte des logements (11) dans lesquels sont placés des goujons (12) solidaires de l'autre mâchoire (1) et qui compriment des ressorts (20) lors de l'écartement des mâchoires (1,2).

3. Dispositif selon l'une des revendications 1 à 2 caractérisé en ce que l'ouverture des mâchoires (1,2) est provoquée par le mouvement de translation du bloc-étau (1,2,3,4) en combinaison avec le glissement du coin (14) sur l'autre coin (15).

4. Dispositif selon la revendication 3 caractérisé en ce que l'angle du coin est compris entre 5 et 15°.

5. Dispositif selon l'une des revendications 2 à 4 caractérisé en ce que une gaine (19) en matériau lubrifiant ou lubrifié est interposée entre le corps des goujons (12) et la mâchoire (2).

6. Dispositif selon l'une des revendications 1 à 5 caractérisé en ce que les mordaches (3,4) sont interchangeables.

7. Dispositif selon l'une des revendications 1 à 6 caractérisé en ce qu'il comporte une butée fixe (21) au niveau de la position ouverte du bloc-étau (1,2,3,4).

**FIG.1**

EP 0 383 705 A1

FIG. 2

FIG. 3

FIG. 4

EP 0 383 705 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CH-A- 524 418 (A.A. DERIAZ et al.) * En entier * | 1-7 | B 23 Q 3/16 |
| A | DE-C- 496 677 (MAYER & SCHMIDT, SCHLEIFMASCHINEN- UND SCHMIRGEL-WERKE AG) * Page 1, ligne 37 - page 2, ligne 13; figures 1,2 * | 1-7 | |
| D,A | FR-A-2 547 754 (SOCIETE UNILEVER) * Page 6, lignes 16-27; page 8, lignes 26-34; figures 1-3 * | 1,6 | |
| A | FR-A-1 019 535 (J. GAL) * Figures 1,3; page 2, colonne de droite, lignes 17-32; page 2, colonne de gauche, lignes 7-11 * | 1 | |
| A | DE-C- 941 646 (GEBR. LEITZ) * Figures 1,2; page 3, lignes 35-63 * | 1 | |
| A | DE-A-2 856 530 (H.M.B. MASCHINENBAU GmbH) | | DOMAINES TECHNIQUES RECHERCHES (Int. Cl.5) B 23 Q |
| A | US-A-1 366 783 (N.F. FRETTER) | | |

Le présent rapport a été établi pour toutes les revendications

| Lieu de la recherche | Date d'achèvement de la recherche | Examinateur |
|---|---|---|
| LA HAYE | 18-05-1990 | MAJERUS H.M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant